# EUROPEAN PATENT SPECIFICATION

(11) **EP 1 413 489 B1**
(45) Date of publication and mention of the grant of the patent: **16.11.2005**
(21) Application number: 03021152.8
(22) Date of filing: 23.09.2003
(51) Int. Cl.: B60R 25/08

(54) **Antitheft device suitable for blocking one or more hydraulic controls**
Diebstahlsicherung zur Blockierung einer oder mehrerer hydraulischer Steuerungen
Dispositif antivol pour bloquer une ou plusieures commandes hyrauliques

(30) Priority: 30.09.2002 IT PC20020025
(43) Date of publication of application: 28.04.2004
(73) Proprietor: Ferrari, Giuliana, 43044 Collecchio PR (IT)
(72) Inventor: Ferrari, Giuliana, 43044 Collecchio PR (IT)
(74) Representative: La Ciura, Salvatore

(56) References cited:
- EP-A- 0 371 174
- EP-A- 0 572 258
- US-A- 4 579 202

## Description

At present there are many antithefts for motor vehicles and they differ in substance for the desired needs.

On this subject it is useful to remember that the most part of motor vehicle thief-proof devices are electrical or electronic and usually of difficult application.

The mechanical ones, on the countrary, are generally simpler but too often they can easily be removed by experienced burglars. In order to describe better the present situation we have to remember that, up to and including today, most motor vehicle makers merely assemble in mass-production the usual steering lock leaving every strategies to private initiatives. It is also important, just for better facing the theme described above, to underline that one of the most relevant characteristics of a good antitheft is represented by the ability of being effective and reliable in case of attempted theft and, at the same time, simple, practical and versatile for those who use it.

For this reason it can be deduced that motor vehicle firms, both for commercial and internal reasons, do not seem to be particularly awakened to the problem explained above. But motor vehicle users have different opinion expecially if they have bought articulated vehicles, because of the very high costs: infact they are very careful in finding any sort of trick to discourage ill-intentioned people.

EP-A-0.371.174 describes an anti-theft device for vehicles according to the preamble of claim 1 comprising a plunger which engages a flexible lip gasket, to close a passage between a pressure fluid supply and the brake cylinders of the vehicle.

The pressure from the supply flexes and opens the gasket, allowing a flow of fluid to feed the brake cylinders. The return flow of the fluid from the brake cylinders is prevented by the engagement of the gasket with the plunger.

The device further comprises means for locking the plunger in its operative position.

In this device, the front wall of the plunger is ever subjected to the fluid pressure.

This invention solves the problems exposed above by means of a hydraulic device suitable for preventing the functioning of hydraulic control devices in motor vehicles such as, for example, the clutch or the brakes; this device being inserted between a pressure generator, for example a pump connected with the clutch or the brake pedal, and the cylinders controlling respectively the clutch or the brakes.

In practice the device of invention, when it acts as antitheft, allows the passage of the oleodynamic fluid only in one direction. In this way it actuates the clutch, that is to say disengaging it, or the brakes, that is to say blocking them, and, since it prevents the downflow of the oil when the pedal is released, it also prevents their functioning. If the device is connected to the clutch it will be impossible to transmit the movement from the engine to the wheels; if the device is connected to the circuit of the brakes, they will be bound preventing the wheel movement.

In the following description, which refers to a preferred embodiment of the invention, that is provided by way of example, it will be clear that the invention is extremely simple and easy to be used. As a consequence it has low cost and a high reliability of functioning.

The invention will be now described referring to the enclosed figures in which:
- Fig. 1 represents the device in longitudinal section and in neutral position;
- Fig. 2 is a side view showing some passages for the oleodynamic fluid;
- Fig. 3 shows in exploded view the inner components of the invention;
- Fig. 4 shows a sectional view of the invention in a particular position occurring during its working;
- Fig. 5 shows the device in longitudinal section in working position.

Referring to the enclosed figures the device of the invention comprises a cylindrical housing (1) in which a cylindrical rod S is inserted, having proximal (2) and distal (3) parts, connected by a central rod (12) of shorter diameter.

A thinner cylindrical rod S", coaxial with cylindrical rod S, is connected and integral with the cylindrical part (2).

Moreover inside this cylindrical rod S there is a duct (14) connecting a point (14') on the basis of the cylindrical part (3) with a hole (26) on the side wall of the cylindrical part (2).

This housing (1) has an axial through hole comprising a first part (28), which allows a sliding coupling with part (2) of rod S, and a second part (28a) of larger diamenter.

At the end of this second part (28a) there is a thread, for connection with the hydraulic circuit on which the device of the invention must be inserted (not shown).

On the side wall of this cylindrical housing (1) a threaded hole (11) is provided, which connects this cavity (28a) with a second part (not shown) of the hydraulic circuit on which the device of the invention must be inserted.

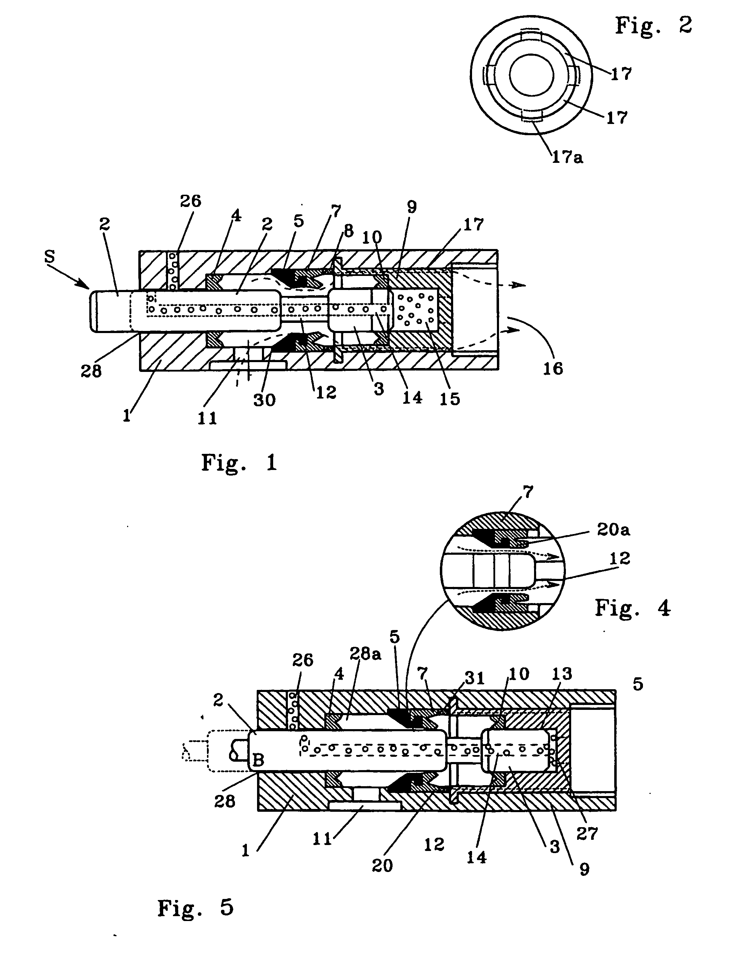

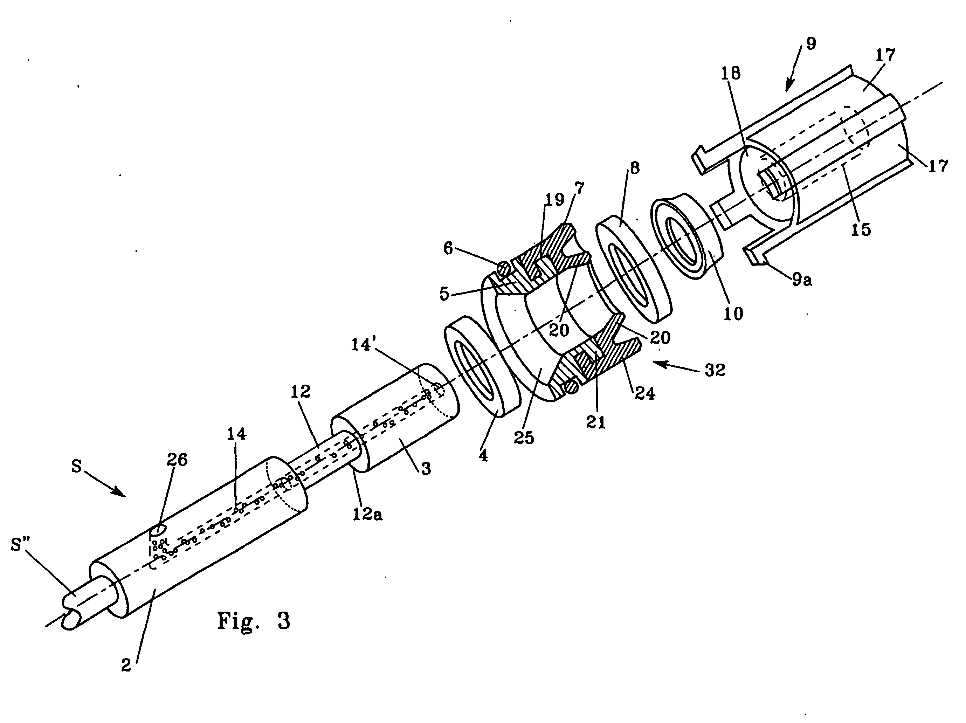

Inside the cavity (28a) and coaxial with it, it is inserted a bush (9) having an axial through hole (15) which allows a sliding seal coupling with the second part (3) of the rod S. The sealing between the cylindrical cavity (15) and the second part (3) of rod S can be obtained, for example, by means of a lip-gasket (10). The insertion of the bush (9) splits the cavity (28a) in two parts which are put in connection by one or more channels (17) (fig. 2) provided on the outer surface of bush (9).

In this way the insertion of the bush (9) does not prevent the free circulation of the oleodynamic fluid in the cavity (28a).

This bush (9) is kept in position inside the cavity (28a) by means of suitable well-known blocking means such as, for example (fig. 3), some teeth (9a), integral with the bush, that snap fit in suitable housings (31) provided on the internal surface of the cavity (28a).

An element (32) is placed between a shoulder (30) provided inside the cavity (28a) and the bush (9), preferably with the interposition of a spacer (8), said element (32) consisting, if necessary, of many elements coupled one another. The element (32) has a cylindrical inner shape so as to obtain a tight connection with the inner wall of the cavity (28a) and a seal engagement with part (2) of rod S rod, when this latter leads its proximal part (2) inside this component (32), by sliding along its axis. The aforesaid seal engagement between the cylindrical part (2) and the component (32) is of a particular kind and it will be described afterwards.

According to a preferred embodiment, this component (32) comprises a bush (5), with a housing for a seal ring (6) in its outer surface, said bush (5), coupling with a gasket (7) made of deformable material, which realizes the sealing with the cylindrical part (2) of S the piston-rod.

The coupling between the bush (5) and the gasket (7) can be obtained, for example, by means of a groove (19) in the gasket (7), in which a collar (21) of the bush (5) is inserted (see fig. 3).

The sealing between the gasket (7) and the cylindrical part (2), when this last is inserted inside the gasket (7), is realized by a flexible lip (20) which resiliently shuts the surface of the cylindrical part (2).

Since this lip (20) is inclined, when the pressure is higher from the part of the bush (5), it is such to enlarge the lip (20) which will assume the shape (20a) (fig. 4), allowing the oleodynamic fluid to flow between the gasket (7) and the cylindrical part (2), assisted by the cone-shaped surface (25) of the bush (5); on the other hand when the pressure is higher from the opposite part, that is to say from the part of the bush (9), it will mostly shut the lip (20) on the cylindrical part (2) so preventing the backward flow of the oleodynamic fluid.

About the movement of rod S, it must be observed that it is not influenced by the presence or by the absence of oleodynamic fluid in pressure, as its axial thrusts, acting on the ring surfaces (12A), counterbalance if the cylindrical parts (2) and (3) of rod S have the same diameter, while the presence of the duct (14) inside the rod S allows the evacuation of the air from the cavity (15) of the bush (9), when the rod S is shifted ahead inside the bush (9).

The device of the invention operates as follows.

The invention is inserted in series with the hydraulic circuit so that the oleodynamic fluid coming out from the pump enters the housing (1) through the opening (11) and, through the cavity (28a), gets into a pipe leading to the device that must be blocked, for example the clutch or the brakes.

When the device is in neutral position, that is to say it is not acting as antitheft, the S piston-rod is in the position shown in fig. 1. In this position the fluid can freely circulate inside the cavity (28a) since the lip (20) of the gasket (7) is in corrispondence of the small diameter part (12) of rod S, and does not perform any sealing with rod S.

In such a situation the invention does not influence the functioning of the hydraulic device of the car that must be blocked.

Making the rod S axially slide, so that it reaches the position shown in fig. 5, the surface of the cylindric part (2) of the piston-rod is inserted inside the gasket (7) so that the lip (20) can tight shut the part (2) of rod S.

In this situation, if the pump which raises pressure of the oleodynamic fluid is operated, the fluid can flow under the lip (20) raising it and, therefore, it can actuate the hydraulic device it is connected with.

If this hydraulic device is in the clutch, this last will be disengaged, while if the hydraulic device is in the brakes, they will be blocked.

On the contrary, when the pressure is higher from the part of the bush (9), since the lip (20) does not raise, it shuts more and more on the surface of the cylindrical part (2), so that the lip (20) tight closes the passage around rod S, obstructing the downflow of the oleodynamic fluid and preventing the reconnection of the clutch and/or the release of the brakes.

It is obvious that in such a situation it is impossible to move the vehicle.

The device of the invention can be easily actuated by means of the rod (S"), integral with the rod S, which can be easily controlled with a key.

Finally the invention will have the dimensions of the internal passages, that do not induce extreme loss of load when it is in neutral position, for not affecting the working of the hydraulic device of the vehicle, but one will have to take care that, during the movement of the S piston-rod, axial thrusts do not occur on the piston-rod itself so to prevent an irregular working of it. It is evident that the invention is able to block one or more oleodynamic controls of a motor vehicle. Further example, the brakes: if we put the invention between the pump of the brakes and its small cylinders the process would be the same, that is to say we would inhibit the use of the brakes.

The mechanism which controls the rod S has not been described, since there are several known solutions to control the forward and back movements of the rod S.

For example a normal key-lock or a more sophisticated radio-controlled system or any other instrument can be suggested.

Therefore we can conclude saying that the materials used for the realization of the "antitheft device suitable for blocking one or more oleodynamic controls" according to the invention, are easily available on the market.

To conclude, we will say that all the details can be replaced by technically equivalent elements: the employed materials can differ according to the needs, provided that they are compatible with this use and with the contingent dimensions and shapes.

## Claims

1. Hydraulic antitheft device for motor vehicles suitable for preventing the functioning of at least an hydraulic device in the aforesaid motor vehicles, of the kind comprising means to be inserted in the circuit of said hydraulic device of the vehicle, said means
including a gasket (7) provided with a flexible lip (20) apt to tightly shut on the surface of a cylindrical rod (S), said cylindrical rod (S) being movable from a neutral position in which it does not interfere with the hydraulic fluid, to a position in which it penetrates into the lip (20), said lip (20) being inclined in such a way that the pressure of the oleodynamic fluid raises it, moving it away from the surface of the cylindrical rod (S), when the pressure increases in the hydraulic circuit of the device that has to be blocked, and it is able to shut the lips on the surface of the cylindrical rod (S), so preventing the downflow, when the oleodynamic fluid tends to flow down,
**characterized by** the fact that said cylindrical rod (S) has a first part (2) and a second part (3) connected by a central rod (12) having a smaller diameter, said cylindrical rod (S) being movable between a position in which the smaller diameter rod (12) is in correspondence with said gasket (7) having said flexible lip (12) and a position in which one of said first (2) and second (3) parts interacts with said flexible lip (20), preventing the return of the fluid and blocking the chosen control, and that, in the rod (S) a hole (14) is provided, communicating with the extemal part of the device so as to allow the air passage necessary for its longitudinal movement.

2. Hydraulic antitheft device, according to claim 1, **characterized in that** said gasket (7) is fastened to a bush (5) said bush (5) having an O-Ring seal on its outer wall, and a cone-shaped inner wall with the purpose of conveying the fluid towards the internal side of the gasket, causing **in that** area an increase of the fluid speed and the raising of the flexible lip (20).

3. Hydraulic antitheft device, according to claim 2, **characterized by** the fact that the rod (S) is dimensioned so that it can always balance the pressures that can be created inside the device in case of attempted theft of the motor vehicle.

## Patentansprüche

1. Diebstahlsichere hydraulische Vorrichtung für Kraftfahrzeuge, geeignet, um das Funktionieren von mindestens einer hydraulischen Vorrichtung besagter Kraftfahrzeuge zu verhindern, des Typs, der Mittel umfasst, die in den Kreislauf der besagten hydraulischen Vorrichtung des Fahrzeugs eingefügt werden, wobei besagte Mittel eine Dichtung (7) umfassen, die mit einer Dichtlippe (20) versehen ist, welche geeignet ist, sich dicht anzuschließen an die Oberfläche eines zylinderförmigen Schaftes (S); besagter zylinderförmiger Schaft (S) bewegt sich zwischen einer neutralen Position, bei der er nicht mit der hydraulischen Flüssigkeit interferiert, und einer Position, bei der er sich in das Innere der besagten Lippe (20) einschiebt; besagte Lippe (20) ist so geneigt, dass der Druck der öldynamischen Flüssigkeit sie hochhebt und sie von der Oberfläche des zylinderförmigen Schaftes (S) entfernt, wenn der Druck im hydraulischen Kreislauf der zu blockierenden Vorrichtung zunimmt, und er ist so groß, dass sich die Lippe auf der Oberfläche des zylinderförmigen Schaftes (S) dicht anschließt und so den Abfluss verhindert, wenn die öldynamische Flüssigkeit zurückzufließen versucht, charakterisiert durch die Tatsache, dass besagter zylinderförmiger Schaft (S) einen ersten Teil (2) und einen zweiten Teil (3) besitzt, verbunden durch einen zentralen Schaft (12) mit kleinerem Durchmesser; besagter zylinderförmiger Schaft (S) bewegt sich zwischen einer Position, in der sich der Schaft (12) mit kleinerem Durchmesser in Übereinstimmung befindet mit besagter Dichtung (7), die besagte flexible Lippe (20) besitzt, und einer Position, in der eines der Teile des besagten ersten Teils (2) und zweiten Teils (3) mit besagter flexibler Lippe (20) interagiert, weshalb der Rückfluss der Flüssigkeit verhindert wird und die erwählte Vorrichtung blockiert wird, und charakterisiert durch die Tatsache, dass im Schaft (S) ein Loch (14) vorgesehen ist, das mit dem Äußeren der Vorrichtung kommuniziert, so dass der Durchgang der Luft ermöglicht wird, die für seine Längsverschiebung notwendig ist.

2. Diebstahlsichere hydraulische Vorrichtung nach Anspruch 1, charakterisiert durch die Tatsache, dass besagte Dichtung (7) an einer Buchse (5) befestigt ist, die eine O-Ring-Dichtung an der Außenwand aufweist, und eine Innenwand besitzt, die kegelförmig gestaltet ist, damit die Flüssigkeit ins Innere der Dichtung befördert wird, wobei in diesem Bereich die Geschwindigkeit der Flüssigkeit zunimmt und die flexible Lippe (20) hochgehoben wird.

3. Diebstahlsichere hydraulische Vorrichtung nach Anspruch 2, charakterisiert durch die Tatsache, dass der Schaft (S) so proportioniert ist, dass jeder Druck, der im Inneren der Vorrichtung bei versuchtem Diebstahl des Kraftfahrzeuges entstehen kann, stets ausgeglichen wird.

## Revendications

1. Dispositif antivol hydraulique pour véhicules à moteur, apte à inhiber le fonctionnement d'au moins un dispositif hydraulique desdits véhicules à moteur, du type comprenant des moyens à insérer dans le circuit dudit dispositif hydraulique du véhicule, lesdits moyens comprenant une garniture (7) dotée d'une lèvre (20) apte à venir se serrer sur la surface d'une tige cylindrique (S), ladite tige cylindrique (S) pouvant se déplacer entre une position neutre dans laquelle elle n'interfère pas avec le fluide hydraulique et une position dans laquelle elle s'insère à l'intérieur de ladite lèvre (20), ladite lèvre (20) étant inclinée de telle façon que la pression du fluide hydraulique la soulève et l'éloigne de la surface de la tige cylindrique (S) quand la pression du circuit hydraulique du dispositif qui doit être bloqué augmenté, et est telle qu'elle serre la lèvre sur la surface de la tige cylindrique (S), empêchant ainsi le reflux, quand le fluide hydraulique tend à refluer, **caractérisé par le fait que** ladite tige cylindrique (S) présente une première partie (2) et une deuxième partie (3) reliées par une tige centrale (12) de diamètre moins important, ladite tige cylindrique (S) se déplaçant entre une position dans laquelle la tige (12) de diamètre moins important se trouve à hauteur de ladite garniture (7) dotée de ladite lèvre flexible (20) et une position dans laquelle lesdites première partie (2) et deuxième partie (3) interagissent avec ladite lèvre flexible (20), empêchant ainsi le reflux du fluide et bloquant le dispositif sélectionné, et **par le fait que** dans la tige (S) un trou (14) communique avec l'extérieur du dispositif, de façon à permettre le passage de l'air nécessaire à son glissement longitudinal.

2. Dispositif antivol hydraulique selon la revendication n° 1, **caractérisé par le fait que** ladite garniture (7) est fixée à une douille (5) présentant un O-Ring sur sa paroi externe, et une paroi interne en forme de cône de façon à convoyer le fluide vers l'intérieur de la garniture, engendrant une augmentation de la vitesse du fluide dans cette zone et soulevant la lèvre flexible (20).

3. Dispositif antivol hydraulique selon la revendication n° 2, **caractérisé par le fait que** les dimensions de la tige (S) permettent toujours d'équilibrer les pressions susceptibles d'être engendrées à l'intérieur du dispositif en cas de tentative de vol du véhicule à moteur.
